# EUROPEAN PATENT SPECIFICATION

(11) **EP 3 738 838 B1**
(45) Date of publication and mention of the grant of the patent: **30.04.2025**
(21) Application number: 18900314.8
(22) Date of filing: 15.06.2018
(51) Int. Cl.: B60R 16/037, B60R 25/25, B60N 2/02

(54) **AUTOMATIC ADJUSTMENT SYSTEM AND METHOD FOR VEHICLE**
AUTOMATISCHES EINSTELLSYSTEM UND VERFAHREN FÜR EIN FAHRZEUG
SYSTÈME ET PROCÉDÉ DE RÉGLAGE AUTOMATIQUE POUR VÉHICULE

(30) Priority: 11.01.2018 CN 201810025679
(43) Date of publication of application: 18.11.2020
(73) Proprietor: NIO (Anhui) Holding Co., Ltd., Hefei City, Anhui Province (CN)
(72) Inventor: YANG, Leijun, Shanghai (CN); DONG, Xiaoxu, Shanghai (CN)
(74) Representative: Vossius & Partner Patentanwälte Rechtsanwälte mbB
(86) International application number: PCT/CN2018/091604
(87) International publication number: WO 2019/136928

(56) References cited:
- EP-A1- 2 058 197
- EP-A1- 2 144 206
- WO-A1-2015/042005
- CN-A- 104 853 965
- CN-A- 105 235 615
- CN-A- 105 480 178
- CN-A- 106 302 713
- CN-U- 203 376 858
- US-A1- 2014 282 931
- US-A1- 2017 169 639

## Description

### Technical Field

The invention relates to vehicle control technologies, and in particular to an automatic adjustment system and method for a vehicle.

### Background Art

With the continuous popularization of new energy vehicles, the problems of difficulty in charging and a long charging time will become increasingly apparent, and the overall solution of energy courier is intended to propose a mode of an energy courier taking an order to replenish power of the new energy vehicles on behalf of a user, in order to bring an excellent power replenishment experience to users of the new energy vehicles. In US patent application US2014/282931, a management system for authenticating a user and customizing a user profile has been disclosed. The system as disclosed includes a control module configured to authenticate an administrator via an administrator identification. The control module may receive a user identification distinct from the administrator identification, receive a set of selected features associated with the user and create a profile including the user identification and the set of selected features. Once the profile is created, the control module may apply the profile associated with the user identification in response to authenticating a user based on the user identification. Moreover, PCT publication WO2015/042005 has disclosed a system for a vehicle including a user identification subsystem operable to detect a user and an interactive display subsystem operable to generate output for display on a vehicle window in response to detection of the user. The system also includes a control subsystem operable to enable a user to control at least one vehicle function through the interactive display subsystem.

However, due to physical features, driving habits, and other factors of the energy courier, it is often necessary to adjust the settings of the vehicle during pick-up and returning of the vehicle in the energy courier service, for convenience of driving. When a subsequent user discovers, during pick-up of the vehicle, that the original settings (such as those of a seat, an air conditioner and a rearview mirror) of the vehicle were changed, he/she needs to readjust the settings, which results in a very poor user experience.

### Summary of the Invention

In view of the above-mentioned problems, the invention is intended to provide an automatic adjustment system and method for a vehicle, which are capable of automatically adjusting settings of the vehicle according to user features.

Further, the invention is intended to provide an automatic adjustment system and method for a vehicle, which make it possible to automatically adjust settings of the vehicle according to recognized features (including the recognition of a body feature, of a facial feature, of an iris feature, etc.) during pick-up of a vehicle by an energy courier or a user.

The subject-matter of the present invention is defined by the features of the independent claims. Further preferred embodiments of the present invention are defined in the dependent claims. Moreover, the present disclosure further discloses an automatic adjustment system for a vehicle, which does not fall within the scope of protection of the present invention, which is characterized by comprising:
a recognition and acquisition subsystem configured to recognize and acquire feature data of a driver and/or a passenger in a vehicle;
a storage subsystem configured to store and retrieve the feature data and vehicle setting parameters corresponding to the feature data; and
a vehicle setting adjustment subsystem configured to automatically adjust settings of the vehicle according to the vehicle setting parameters that are stored in the storage subsystem and that correspond to the feature data recognized by the recognition and acquisition subsystem.

Optionally, the storage subsystem is further configured to store the latest vehicle setting parameters set by an energy courier during current driving of the vehicle.

Optionally, the vehicle setting adjustment subsystem is configured to restore, when an energy courier completes battery charging of the vehicle and returns the vehicle back to a vehicle owner, the settings of the vehicle according to the vehicle setting parameters before the battery charging.

Optionally, the recognition and acquisition subsystem is further configured to recognize features of the driver, a passenger in a passenger seat, and a passenger in a rear seat, and call corresponding vehicle setting parameters from the storage subsystem according to the recognized features, and the vehicle setting adjustment subsystem is further configured to automatically adjust the settings of a driver seat, the passenger seat, and the rear seat according to the vehicle setting parameters.

Optionally, the storage subsystem comprises:
a feature database configured to store the feature data and the vehicle setting parameters corresponding to the feature data; and
a retrieval module configured to establish an index and implement retrieval to output the corresponding vehicle settings.

Optionally, the vehicle setting adjustment subsystem comprises:
an instruction receiving module configured to receive the vehicle setting parameters from the storage subsystem; and
a vehicle parts setting adjustment module configured to set various parts of the vehicle according to the vehicle setting parameters.

Optionally, the recognition and acquisition subsystem comprises:
an onboard image acquisition module configured to acquire features of the driver, a passenger in a passenger seat, and a passenger in a rear seat;
an image processing module configured to perform data processing on the features acquired by the onboard image acquisition module; and
a feature recognition module configured to recognize the features on which the image processing module performs data processing.

The invention provides an automatic adjustment method for a vehicle, which is characterized by being implemented by means of a recognition and acquisition subsystem, a storage subsystem, and a vehicle setting adjustment subsystem, wherein the method comprises the following steps:
a service request step of issuing, by a vehicle owner, a request for an energy courier service;
a service authorization step of authorizing, based on the request for an energy courier service, an energy courier to use a vehicle;
a feature value preloading step of preloading, by the storage subsystem, vehicle setting parameters corresponding to the energy courier;
an object recognition step of recognizing features of the energy courier and determining whether there are vehicle setting parameters corresponding to the features, by the recognition and acquisition subsystem; and
an automatic vehicle adjustment step of automatically adjusting, if there are corresponding vehicle setting parameters in the storage subsystem, settings of the vehicle according to the vehicle setting parameters, and adjusting, if there is no corresponding vehicle setting parameter in the storage subsystem, the settings of the vehicle according to the latest vehicle setting parameters set by the energy courier during current driving of the vehicle, by the vehicle setting adjustment subsystem.

Optionally, after the automatic adjustment of a vehicle, the method further comprises:
a parameter storage step of storing, by the storage subsystem, the latest vehicle setting parameters set by the energy courier during current driving of the vehicle.

Optionally, after the automatic adjustment of a vehicle, the method further comprises:
a vehicle setting restoration step of restoring, by the vehicle setting adjustment subsystem and when the energy courier completes battery charging of the vehicle and returns the vehicle to a vehicle owner, the settings of the vehicle according to the vehicle setting parameters before the battery charging or swapping.

Optionally, the method further comprises:
an additional vehicle setting step of recognizing, by the recognition and acquisition subsystem, features of a passenger in a passenger seat or in a rear seat and calling corresponding vehicle setting parameters from the storage subsystem according to the recognized features, and automatically adjusting, by the vehicle setting adjustment subsystem, the setting of the passenger seat or the rear seat according to the vehicle setting parameters.

The invention provides a computer-readable medium, which has a computer program stored thereon, characterized in that the computer program implements, when executed by a processor, the automatic adjustment method for a vehicle as described above.

The invention provides a computer device, which comprises a memory, a processor, and a computer program stored on the memory and executable on the processor, characterized in that the computer program implements, when executed by the processor, the steps of the automatic adjustment method for a vehicle as described above.

As described above, in the automatic adjustment system and method for a vehicle according to the invention, the particularity of an energy courier service that is not considered in a conventional automatic vehicle setting adjustment scheme can be considered, such as an authorization process when an energy courier uses a vehicle, and an automatic recovery process when the energy courier returns the vehicle. In the invention, the influence, on the user, of the behavior of the courier changing the settings of the user vehicle is considered. Therefore, in the invention, features are recognized to form appropriate vehicle settings so as to form a feature library for automatic setting of the vehicle, thereby reducing or eliminating any influence, on the user, of the energy courier using the vehicle.

### Brief Description of the Drawings

FIG. 1 is a schematic diagram of the construction of an automatic adjustment system for a vehicle according to an embodiment of the invention.
FIG. 2 is a flowchart representing an automatic adjustment method for a vehicle according to an embodiment of the invention.

### Detailed Description of Embodiments

A plurality of embodiments of the invention are introduced below and are intended to provide a basic understanding of the invention. They are not intended to confirm key or decisive elements of the invention or limit the scope of protection.

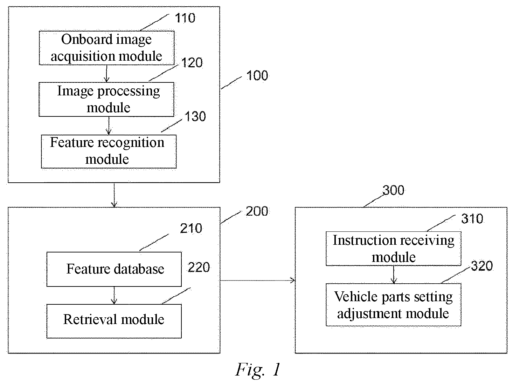

FIG. 1 is a schematic diagram of the construction of an automatic adjustment system for a vehicle according to an embodiment of the invention.

As shown in FIG. 1, the automatic adjustment system for a vehicle according to the invention comprises:
a recognition and acquisition subsystem 100 configured to recognize and acquire feature data of a driver and/or a passenger in a vehicle;
a storage subsystem 200 configured to store and retrieve the feature data and vehicle setting parameters corresponding to the feature data; and
a vehicle setting adjustment subsystem 300 configured to automatically adjust settings of the vehicle according to the vehicle setting parameters in the storage subsystem 200 that correspond to the feature data recognized by the recognition and acquisition subsystem 100.

The recognition and acquisition subsystem 100 is further configured to recognize features of the driver, a passenger in a passenger seat, and a passenger in a rear seat, and call corresponding vehicle setting parameters from the storage subsystem 200 according to the recognized features, and the vehicle setting adjustment subsystem 300 is further configured to automatically adjust the settings of a driver seat, the passenger seat, and the rear seat according to the vehicle setting parameters.

The recognition and acquisition subsystem 100 comprises:
an onboard image acquisition module 110 configured to acquire features of the driver, a passenger in a passenger seat, and a passenger in a rear seat;
an image processing module 120 configured to perform data processing on the features acquired by the onboard image acquisition module 110; and
a feature recognition module 130 configured to recognize the features on which the image processing module 120 performs data processing.

The storage subsystem 200 comprises:
a feature database 210 configured to store the feature data and the vehicle setting parameters corresponding to the feature data; and
a retrieval module 220 configured to establish an index and implement retrieval to output the corresponding vehicle settings.

The vehicle setting adjustment subsystem 300 comprises:
an instruction receiving module 310 configured to receive the vehicle setting parameters from the storage subsystem; and
a vehicle parts setting adjustment module 320 configured to set various parts of the vehicle according to the vehicle setting parameters.

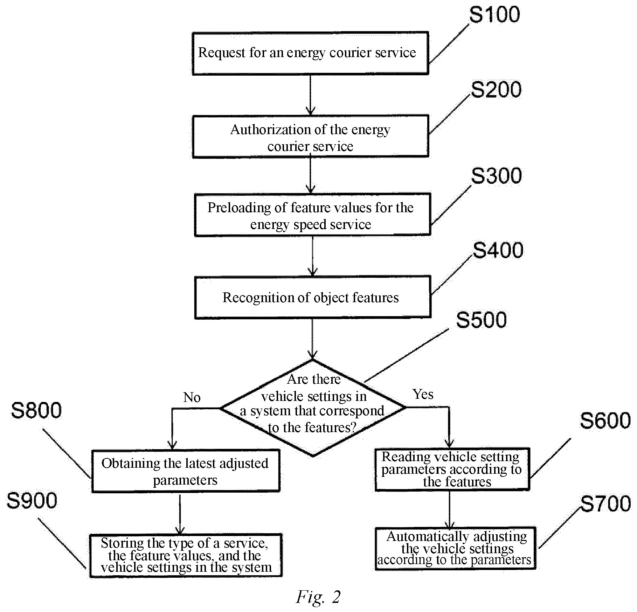

FIG. 2 is a flowchart representing an automatic adjustment method for a vehicle according to an embodiment of the invention.

As shown in FIG. 2, the automatic adjustment method for a vehicle according to an embodiment of the invention comprises the steps as follows:
in step S100, a vehicle c1 of a vehicle owner u1 issues a request for an energy courier service when the electric quantity of the vehicle is insufficient.

In step S200, an energy courier f1 takes an order, and the energy courier f1 is authorized to use the vehicle based on the request for an energy courier service, for example, using the settings such as a vehicle seat and a rearview mirror; and
in step S300, a storage subsystem 200 preloads vehicle setting parameters corresponding to the energy courier fl, while personalized vehicle setting parameters of the vehicle owner ul are cached.

In step S400, the energy courier f1 picks up the vehicle c1 for power replenishment, the recognition and acquisition subsystem 100 recognizes a feature p2 of the energy courier, comprising, but not limited to, a biological feature (for example, a facial feature, an iris, a fingerprint, etc.), and also a feature p2 of the energy courier that is imported from other systems or acquired offline and then uploaded.

In step S500, the feature p2 of the energy courier and data indicating that the type of an object is Energy courier are read, the retrieval module 220 searches the feature database 210 for a record with the highest degree of matching with time and feature value and returns the record, and if there is a vehicle setting parameter corresponding to the feature p2 of the energy courier in the feature database 210, the process proceeds to step S600, and the process proceeds to step S800 if not. Table 1 below shows an example of the feature data stored in the feature database 210 and the vehicle setting parameters corresponding to the feature data.

**Table 1**

| Feature number | Type of service | Type of object | Time | Feature value | Vehicle setting |
|---|---|---|---|---|---|
| PA001 | Power replenishment | Energy courier | At night | Facial feature | Angle of rearview mirror, inclination angle of seat, temperature of air conditioner |
| | | | | Height | |
| | | | | Weight | |
| | | | | Ambient temperature | |
| | | | | ... | |
| | | | | | ... |
| PA002 | Designated driving | Vehicle owner | Antemeridiem | Facial feature | Inclination angle of seat |
| | | | | ... | ... |

In step S600, if there is a corresponding vehicle setting parameter in the storage subsystem 200, the vehicle setting adjustment subsystem 300 reads the corresponding vehicle setting parameter p2.

In step S700, the vehicle setting adjustment subsystem 300 automatically adjusts the settings of the vehicle, such as a vehicle seat, a rearview mirror, and an air conditioner, for the energy courier f1.

In step S800, where the settings of the vehicle fail to be returned by means of the above-mentioned request, the vehicle setting adjustment subsystem 300 creates a feature record indicating that the type of an object is Energy courier fl, and a vehicle setting parameter.

In step S900, changes in the setting that are made by the energy courier during the service are stored in the storage subsystem 200.

After the above-mentioned steps, in a preferred manner, when the energy courier f1 returns the vehicle after completion of the service, the vehicle setting adjustment subsystem 300 detects that the vehicle is not returned by the vehicle owner (that is, the feature p2 of the energy courier f1 does not match the previously cached feature p1 of the vehicle owner), and the vehicle setting adjustment subsystem 300 automatically restores the settings of the vehicle seat, rearview mirror, air conditioner, etc. for the vehicle owner according to the personalized vehicle setting parameters of the vehicle owner ul that are cached before pick-up of the vehicle.

Next, some variant embodiments of the automatic adjustment system and method for a vehicle according to the invention will be described.

In the above-mentioned automatic adjustment system and method for a vehicle according to the invention, user features and a vehicle setting information library may be opened to other trusted users of the system for automatic recommendation or adjustment of the settings of the vehicle, such as the settings of the seat, the rearview mirror and the temperature of the air conditioner. Certainly, the same setting may also be applied to the setting of user household equipment (for example, the setting of the temperature of a vehicle air conditioner may be applied to the setting of the temperature of a household air conditioner, so does the setting of a seat).

In the above-mentioned automatic adjustment system and method for a vehicle according to the invention, the recognition of the user features not only comprises the recognition of features of the driver, but also may comprise the recognition of real-time postures of the passengers in the passenger seat and the rear seat, and the recording of their habits. The settings of the vehicle may also comprise dynamic adjustment of the passenger seat and the rear seat (for example, an automatic adjustment to an appropriate position is triggered when an infant in the rear seat needs comfort from his/her mother in the front seat).

Furthermore, the above-mentioned feature data and the settings of the vehicle may be used for big data analysis, evaluation of the service of the energy courier, etc., and may also be used to arrive at a relationship between the vehicle setting and driving quality, for final use in improving the driving quality or quality of service, lowering the vehicle accident rate, etc.

As described above, in the automatic adjustment system and method for a vehicle according to the invention, the particularity of an energy courier service that is not considered in a conventional automatic vehicle setting adjustment scheme can be considered, such as an authorization process when an energy courier uses a vehicle, and an automatic recovery process when the energy courier returns the vehicle.

Moreover, the energy courier may pass the authentication of a vehicle of a user and drive the vehicle for power replenishment. In the invention, the influence, on the user, of the behavior of the courier changing the settings of the user vehicle is considered. Therefore, in the invention, features are recognized to form appropriate vehicle settings so as to form a feature library for automatic setting of the vehicle, thereby reducing or eliminating any influence on the user.

In addition, a conventional onboard computer system usually only records historical settings of the current account, and adjusts or restores the settings according to different accounts, and also, for the sake of privacy, this part of data cannot be shared, and it can be hardly optimized. In the invention, features are recognized to form appropriate vehicle settings, so that the system can share data among different account systems, which is independent of the privacy of a specific user. At the same time, an automatic adjustment range for the settings of the vehicle is expanded not only to the settings related to the vehicle owner, but also can be used to enhance the experience of the secondary driver and passengers.

Moreover, the invention provides a computer-readable medium, which has a computer program stored thereon, characterized in that the computer program implements, when executed by a processor, the automatic adjustment method for a vehicle as described above.

Moreover, the invention provides a computer device, which comprises a memory, a processor, and a computer program stored on the memory and executable on the processor, characterized in that the computer program implements, when executed by the processor, the steps of the automatic adjustment method for a vehicle as described above.

For the computer-readable medium, there is a magnetic recording device, an optical disc, a magneto-optical recording medium, a semiconductor memory, etc. For the magnetic recording device, there is an HDD, an FD, a magnetic tape, etc. For the optical disc, there is a DVD (Digital Versatile Disc), a DVD-RAM, a CD-ROM, a CD-R (Recordable)/RW (ReWritable), and the like. For the magneto-optical recording device, there is an MO (Magneto Optical disk), etc.

The examples above mainly describe the automatic adjustment system and method for a vehicle according to the invention. Although only some specific implementations of the invention are described, a person of ordinary skill in the art should understand that the invention may be implemented in multiple other forms without departing from the essence and scope of the invention. Accordingly, the presented examples and implementations are considered to be illustrative rather than restrictive, and the invention may encompass various modifications and replacements without departing from the scope of the invention that are defined by the appended claims.

## Claims

1. An automatic adjustment method for a vehicle, being implemented by means of a recognition and acquisition subsystem, a storage subsystem, and a vehicle setting adjustment subsystem, wherein the method comprises the following steps:
a service request step (S100) of issuing, by a vehicle owner, a request for an energy courier service;
a service authorization step (S200) of authorizing, based on the request for an energy courier service, an energy courier to use a vehicle;
a feature value preloading step (S300) of preloading, by the storage subsystem, vehicle setting parameters corresponding to the energy courier;
**characterized in that** the method further comprising:
an object recognition step (S400) of recognizing features of the energy courier and determining whether there are vehicle setting parameters corresponding to the features, by the recognition and acquisition subsystem; and
an automatic vehicle adjustment step (S700) of automatically adjusting, if there are corresponding vehicle setting parameters in the storage subsystem, settings of the vehicle according to the vehicle setting parameters, and adjusting, if there is no corresponding vehicle setting parameter in the storage subsystem, the settings of the vehicle according to the latest vehicle setting parameters set by the energy courier during current driving of the vehicle, by the vehicle setting adjustment subsystem.

2. The automatic adjustment method for a vehicle according to claim 1, **characterized in that** after the automatic adjustment of a vehicle, the method further comprises:
a parameter storage step (S900) of storing, by the storage subsystem, the latest vehicle setting parameters set by the energy courier during current driving of the vehicle.

3. The automatic adjustment method for a vehicle according to claim 1, **characterized in that**
after the automatic adjustment of a vehicle, the method further comprises:
a vehicle setting restoration step of restoring, by the vehicle setting adjustment subsystem and when the energy courier completes battery charging of the vehicle and returns the vehicle to a vehicle owner, the settings of the vehicle according to the vehicle setting parameters before the battery charging or swapping.

4. The automatic adjustment method for a vehicle according to claim 1, **characterized by** further comprising:
an additional vehicle setting step of recognizing, by the recognition and acquisition subsystem, features of a passenger in a passenger seat or in a rear seat and calling corresponding vehicle setting parameters from the storage subsystem according to the recognized features, and automatically adjusting, by the vehicle setting adjustment subsystem, the setting of the passenger seat or the rear seat according to the vehicle setting parameters.

5. A computer-readable medium having a computer program stored thereon, **characterized in that** the computer program implements, when executed by a processor, an automatic adjustment method for a vehicle according to any one of claims 1 to 4.

6. A computer device, comprising a memory, a processor, and a computer program stored on the memory and executable on the processor, **characterized in that** the computer program implements, when executed by the processor, the steps of the automatic adjustment method for a vehicle according to any one of claims 1 to 4.

## Patentansprüche

1. Automatisches Anpassungsverfahren für ein Fahrzeug, wobei das Verfahren mittels eines Erkennungs- und Erfassungsteilsystems, eines Speicherteilsystems und eines Fahrzeugeinstellungs-Anpassungsteilsystems implementiert wird, wobei das Verfahren die folgenden Schritte umfasst:
einen Dienstanforderungsschritt (S100) zum Ausgeben einer Anforderung für einen Energiekurierdienst durch einen Fahrzeughalter;
einen Dienstzulassungsschritt (S200), um auf der Grundlage der Anforderung für einen Energiekurierdienst einem Energiekurier das Verwenden eines Fahrzeugs zuzulassen;
einen Merkmalswert-Vorladeschritt (S300) zum Vorladen von dem Energiekurier entsprechenden Fahrzeugeinstellungsparametern durch das Speicherteilsystem;
**dadurch gekennzeichnet, dass** das Verfahren ferner Folgendes umfasst:
einen Objekterkennungsschritt (S400) zum Erkennen von Merkmalen des Energiekuriers und zum Bestimmen, ob es den Merkmalen entsprechende Fahrzeugeinstellungsparameter gibt, durch das Erkennung- und Erfassungsteilsystem; und
einen automatischen Fahrzeuganpassungsschritt (S700) zum automatischen Anpassen von Einstellungen des Fahrzeugs in Übereinstimmung mit den Fahrzeugeinstellungsparametern, falls es in dem Speicherteilsystem entsprechende Fahrzeugeinstellungsparameter gibt, und zum Anpassen der Einstellungen des Fahrzeugs in Übereinstimmung mit den neuesten Fahrzeugeinstellungsparametern, die durch den Energiekurier während des aktuellen Fahrens des Fahrzeugs eingestellt werden, durch das Fahrzeugeinstellungs-Anpassungsteilsystem, falls es in dem Speicherteilsystem keine entsprechenden Fahrzeugeinstellungsparameter gibt.

2. Automatisches Anpassungsverfahren für ein Fahrzeug nach Anspruch 1, **dadurch gekennzeichnet, dass** das Verfahren nach der automatischen Anpassung eines Fahrzeugs ferner Folgendes umfasst:
einen Parameterspeicherschritt (S900) zum Speichern der neuesten Fahrzeugeinstellungsparameter, die durch den Energiekurier während des aktuellen Fahrens des Fahrzeugs eingestellt werden, durch das Speicherteilsystem.

3. Automatisches Anpassungsverfahren für ein Fahrzeug nach Anspruch 1, **dadurch gekennzeichnet, dass**
das Verfahren nach der automatischen Anpassung eines Fahrzeugs ferner Folgendes umfasst:
einen Fahrzeugeinstellungs-Wiederherstellungsschritt zum Wiederherstellen der Einstellungen des Fahrzeugs in Übereinstimmung mit den Fahrzeugeinstellungsparametern vor der Batterieladung oder dem Batteriewechsel, durch das Fahrzeugeinstellungs-Anpassungsteilsystem und wenn der Energiekurier die Batterieladung des Fahrzeugs abschließt und das Fahrzeug an einen Fahrzeughalter zurückgibt.

4. Automatisches Anpassungsverfahren für ein Fahrzeug nach Anspruch 1, **dadurch gekennzeichnet, dass** das Verfahren ferner Folgendes umfasst:
einen zusätzlichen Fahrzeugeinstellungsschritt des Erkennens von Merkmalen eines Insassen auf einem Beifahrersitz oder auf einer Rückbank und zum Aufrufen entsprechender Fahrzeugeinstellungsparameter aus dem Speicherteilsystem in Übereinstimmung mit den erkannten Merkmalen durch das Erkennungs- und Erfassungsteilsystem und zum automatischen Anpassen der Einstellung des Beifahrersitzes oder der Rückbank in Übereinstimmung mit den Fahrzeugeinstellungsparametern durch das Fahrzeugeinstellungs-Anpassungsteilsystem.

5. Computerlesbares Medium, in dem ein Computerprogramm gespeichert ist, **dadurch gekennzeichnet, dass** das Computerprogramm, wenn es durch einen Prozessor ausgeführt wird, ein automatisches Einstellverfahren für ein Fahrzeug nach einem der Ansprüche 1 bis 4 implementiert.

6. Computervorrichtung, die einen Speicher, einen Prozessor und ein Computerprogramm, das in dem Speicher gespeichert ist und in dem Prozessor ausführbar ist, umfasst, **dadurch gekennzeichnet, dass** das Computerprogramm, wenn es durch den Prozessor ausgeführt wird, die Schritte des automatischen Anpassungsverfahrens für ein Fahrzeug nach einem der Ansprüche 1 bis 4 implementiert.

## Revendications

1. Procédé d'ajustement automatique pour un véhicule, étant mis en œuvre au moyen d'un sous-système de reconnaissance et d'acquisition, d'un sous-système de stockage, et d'un sous-système d'ajustement des réglages d'un véhicule, ce procédé comprenant les étapes suivantes :
une étape de demande de service (S100) consistant en l'émission, par un propriétaire de véhicule, d'une demande de service de coursier d'énergie ;
une étape d'autorisation de service (S200) consistant à autoriser, en se basant sur la demande d'un service de coursier d'énergie, un coursier d'énergie à utiliser un véhicule ;
une étape de préchargement de valeurs de caractéristiques (S300) consistant à précharger, au moyen du sous-système de stockage, des paramètres de réglage du véhicule correspondant au coursier d'énergie ;
**caractérisé en ce que** procédé comprend en outre :
une étape de reconnaissance d'objet (S400) consistant à reconnaître des caractéristiques du coursier d'énergie et à déterminer s'il y a ou pas des paramètres de réglage du véhicule correspondant à ces caractéristiques, au moyen du sous-système de reconnaissance et d'acquisition ; et
une étape d'ajustement automatique du véhicule (S700) consistant à ajuster automatiquement, s'il y a des paramètres de réglage du véhicule correspondants dans le sous-système de stockage, des réglages du véhicule selon les paramètres de réglage du véhicule, et à ajuster, s'il n'y a pas de paramètres de réglage du véhicule correspondants dans le sous-système de stockage, les réglages du véhicule selon les derniers paramètres de réglage du véhicule établis par le coursier d'énergie pendant la conduite courante du véhicule, au moyen du sous-système d'ajustement des réglages du véhicule.

2. Procédé d'ajustement automatique pour un véhicule selon la revendication 1, **caractérisé en ce que**, après l'ajustement automatique d'un véhicule, ce procédé comprend en outre :
une étape de stockage de paramètres (S900) consistant à stocker, au moyen du sous-système de stockage, les derniers paramètres de réglage du véhicule établis par le coursier d'énergie pendant la conduite courante du véhicule.

3. Procédé d'ajustement automatique pour un véhicule selon la revendication 1, **caractérisé en ce que**
après l'ajustement automatique d'un véhicule, ce procédé comprend en outre :
une étape de rétablissement des réglages d'un véhicule consistant à rétablir, au moyen du sous-système d'ajustement des réglages du véhicule et lorsque le coursier d'énergie achève la charge de la batterie du véhicule et ramène le véhicule à un propriétaire de véhicule, les réglages du véhicule selon les paramètres de réglage du véhicule avant la charge ou l'échange de la batterie.

4. Procédé d'ajustement automatique pour un véhicule selon la revendication 1, **caractérisé en ce qu'**il comprend en outre :
une étape de réglage supplémentaire du véhicule consistant à reconnaître, au moyen du sous-système de reconnaissance et d'acquisition, les caractéristiques d'un passager sur un siège de passager ou sur un siège arrière et à invoquer des paramètres de réglage du véhicule correspondants à partir du sous-système de stockage selon les caractéristiques reconnues, et à ajuster automatiquement, au moyen du sous-système d'ajustement des réglages du véhicule, le réglage du siège de passager ou du siège arrière selon les paramètres de réglage du véhicule.

5. Support lisible par ordinateur sur lequel est stocké un programme informatique, **caractérisé en ce que** ce programme informatique met en œuvre, lorsqu'il est exécuté par un processeur, le procédé d'ajustement automatique pour un véhicule selon l'une quelconque des revendications 1 à 4.

6. Appareil informatique, comportant une mémoire, un processeur et un programme informatique stocké dans la mémoire et exécutable sur le processeur, **caractérisé en ce que** ce programme informatique met en œuvre, lorsqu'il est exécuté par le processeur, les étapes du procédé d'ajustement automatique pour un véhicule selon l'une quelconque des revendications 1 à 4.
